# EUROPEAN PATENT SPECIFICATION

(11) **EP 4 263 199 B1**
(45) Date of publication and mention of the grant of the patent: **12.03.2025**
(21) Application number: 21831093.6
(22) Date of filing: 13.12.2021
(51) Int. Cl.: B29D 99/00, B63H 9/02, B29C 53/58, B29C 53/66, B29C 63/02

(54) **A ROTOR SAIL**
ROTORSEGEL
VOILE DE ROTOR

(30) Priority: 15.12.2020 GB 202019832
(43) Date of publication of application: 25.10.2023
(73) Proprietor: Anemoi Marine Technologies Ltd., London EC3N 3AA (GB)
(72) Inventor: MCEWEN, Luke Neil, Lymington Hampshire SO41 3SB (GB); CONTOPOULOS, Nicholas, Hullbridge Essex SS5 6QB (GB)
(74) Representative: Potter Clarkson
(86) International application number: PCT/GB2021/053261
(87) International publication number: WO 2022/129878

(56) References cited:
- WO-A1-2013/110695
- GB-A- 2 524 753

## Description

### Background to the Invention

This invention relates to a rotor sail for the wind assisted propulsion of objects, and particularly, but not exclusively to rotor sails for wind assisted propulsion of ships. The method also relates to a method of forming such a rotor sail, and of a vessel incorporating a rotor sail.

Rotor sails of this type, as for example disclosed in GB2524753A are also known as Flettner rotors. Known such rotor sails are typically made as a cylindrical sleeve which forms the rotor. This sleeve is adapted to spin on a static tower. Upper and lower bearings locate the rotor on the tower. Wind loads act on the rotor, typically seen as a reduction in air pressure on one side of the rotor known as the suction side. The air pressure distribution has two main effects structurally:
- Bending moment on the rotor as a whole (i.e. acting as a beam of circular hollow section subjected to a distributed load). This causes stresses in the plane of the rotor skin, primarily tension and compression in the rotor axial direction due to the bending moment, with some in-plane shear caused by the accompanying shear force.
- Local bending moments on the rotor skin tending to distort the circular cross section, because of the non-uniform distribution of air pressure around the section. This causes tensile and compressive stresses primarily in the circumferential direction around the rotor.

In the life of a rotor sail, major stresses on the rotor will fluctuate or even reverse with each revolution. The number of revolutions in the life of a rotor is very large, of the order of billions. This means that known sail rotors are made from a material that is resistant to fatigue failure. Laminated composite materials of continuous glass fibres or carbon fibres in a polymer resin are suitable for this application.

In order to provide strength to the rotor, the fibres of the composite material used to make the cylindrical sleeve should be aligned with the principal stresses on the sleeve during use of the rotor. This is because it is the fibres of the composite material that will provide the most strength to the rotor as a whole.

In known rotor sails, around 50% of the total strength will need to be longitudinal, in other words aligned with the rotor axis, and around 30% of the total strength will need to come **from approximately** circumferentially orientated fibres, i.e. fibres which are perpendicular to the rotor axis.

The remaining material provides resistance to in-plane shear stresses although the in-plane shear stresses in a rotor sail are relatively small due to the inherent shear and torsional resistance of a large diameter tube of the type forming part of a rotor sail.

A further requirement is that the circumferentially orientated fibres should be as far as possible from the midplane or neutral axis of the laminate material forming the cylindrical sleeve. Such an arrangement will provide optimum bending strength in the circumferential direction. This helps to resist the local bending moments tending to distort the circular cross-section.

Bending stiffness in the circumferential direction is also beneficial in order to resist buckling of the cylinder.

The cylindrical sleeve is more liable to buckle in the circumferential direction than in the axial direction because cylinders are naturally more resistant to buckling axially due to the curvature of the surface of the cylinder.

In known rotor sails it is known to add a foam core to the laminate material forming the cylindrical sleeve in order to achieve appropriate distancing of the circumferential fibres from the neutral axis of the laminate forming the cylinder. Such a foam core may be added to the middle the laminate to form a sandwich type configuration.

Both the in-plane axial stresses and the circumferential bending stresses on laminate forming a known rotor will fluctuate with every revolution of the rotor. A large rotor sail will spin at typically up to 250 rpm. This means that throughout the life of such a rotor sail, which is typically 20 to 25 years, the laminate forming the rotor may be subject to the order of 1 to 2 billion fatigue cycles.

For glass fibre / epoxy laminates, the fatigue strength at a billion cycles is only around 15% of the static stress. For carbon fibre / epoxy laminates, the fatigue strength may be around 25% of the static strength.

The demands on the laminate of a rotor sail are therefore considerably more onerous than the demands on other large composite structures such as boat hulls, wind turbine blades, aircraft wings, pressure vessels, pipes or water tanks.

Because the demands on a laminate when used to make a rotor sail are considerably different and more onerous than the demands on other large composite structures, known methods of making suitable composite structures may not therefore be appropriate with respect to rotor sails.

One known method of making composite materials is known as pultrusion. This method is suitable for making straight tubes of circular or any other hollow or solid cross section in a single operation. Pultrusion is a low-cost process because it is automated and the raw materials are in their simplest form (liquid polymer resins and tows of glass or carbon fibre) which are used straight from a bobbin on which the tows are wound.

Tension is used to pull a profile through a dye. This means that fibres are straight, which maximises the compressive strength of a cured material forming a straight tube.

For many uses, compressive strength is often a main consideration when designing a structural part from composite materials and therefore pultrusion is often an appropriate method to use. However, pultrusion is most practical for small cross sections or long production runs. Pultrusion becomes more expensive for larger diameter tubes because it is necessary to use a larger dye and to exert greater pulling forces.

Still further, pultrusion is not suitable for a forming a composite material that is required to withstand circumferential stresses, unless off-axis fibres are incorporated, which adds cost to the process.

Another known method involves winding pre-impregnated tape or fibre ("prepreg") around a mandrel. This process can be automated to minimise labour costs but is nevertheless expensive due the high cost of the prepreg material and the high temperatures required for curing the material.

Another known method for forming composite materials is resin infusion, also known as VARTM (Vacuum Assisted Resin Transfer Moulding). This method is reasonably economical, with material costs driven down by the high-volume wind turbine blade industry.

However, the process of laying up the material into a mould and applying the vacuum consumables is labour intensive and difficult to automate. Furthermore, the vacuum consumables represent a wasted cost as they are typically not reusable or recyclable.

In addition, resin infusion is not suited to the formation of a complete tubular structure. Because of this a tubular structure formed using resin infusion will typically be formed from two or more pieces. These pieces then need to be bonded together after the material has been cured. The bonding operation adds a process step, and therefore increases the time required and the costs.

Another known method for forming hollow tubes from a composite material is filament winding. This method is economical, particularly because it can be almost entirely automated thus reducing labour costs. In addition, similarly to the pultrusion method, the materials used are in their simplest form. The materials are potentially in the form of liquid polymer resin and tows of glass or carbon fibre are used straight from the bobbin storing such fibres.

Filament winding is not suitable for making composite structures in which the majority of fibres are orientated axially along the tube formed from the winding process.

For these reasons, it is known to manufacture rotor sails using the resin infusion method. A typical known rotor sail made using the resin infusion method will use a composite material having a sandwich construction with a foam core in the middle of the composite structure. The foam core will separate the outer layers to provide the required bending strength in the circumferential direction. Disadvantages of this method include the following:
- The resin infusion method offers limited scope for automation (as the fabrics must be laid up in the mould by hand) or reduction in the material cost (as the fibres must first be woven or stitched into a cloth which is then cut to size before moulding).
- In order for resin to infuse easily it must have a very low viscosity, which limits the molecular weight of the resin and hence its strength. Other processes can use longer polymer molecules which offer improved mechanical performance.
- The resin infusion method applies no tension to keep the fibres straight while the resin cures, meaning that the compressive strength of the material is lower, so more material is needed than would be the case if the fibres were held straighter.
- Foam cores are relatively expensive both in material cost and labour and soak up a significant weight of resin which adds weight and further cost to the part.

With rotor sails, the typical operating strains need to be kept to around 0.15% or less in both the axial and circumferential directions in order to achieve sufficient fatigue life.

There is therefore a need for an economical method of forming a composite material to form a rotor sail which has the required axial and circumferential strength.

### Summary of the Invention

According to a first aspect of the present invention there is provided a method of manufacturing a rotor body forming part of a rotor sail, the method comprising the steps of: winding first fibres around a mandrel to form a tubular first skin forming a rotor tube and having a tube axis; forming a plurality of strips from second fibres; attaching the strips to a surface of the first skin such that at least some of the second fibres extend axially along the rotor body.

The tubular first skin forms the outer cylindrical sleeve of a rotor sail. Because the method of filament winding is used, the cylindrical sleeve can be manufactured in one piece circumferentially. This means that it is not necessary to use additional steps to bond separate portions together to form the tubular shape.

The method of filament winding is economical, not least of all because it can be automated.

The method comprises the additional step of forming a plurality of strips made from second fibres. The fibres in the plurality of strips extend axially along a rotor body.

The strips are attached to a surface of the first skin.

The strips therefore provide the axial strength required for rotor sails.

The inventors have realised that by forming the first skin using a filament winding method and then attaching strips to a surface of the first skin, wherein the strips are formed from fibres at least some of which extend axially along the rotor body, both circumferential and axial strength is provided to the rotor body.

By means of embodiments of the invention, therefore, a cylindrical sleeve for a rotor body for a rotor sail may be made at relatively low cost.

In embodiments of the invention, the method comprises the further step of impregnating the fibres with resin before winding the fibres around the mandrel.

In embodiments of the invention, the first fibres are wound around the mandrel such that the orientation of the first fibres is between 45° and 90° to the tube axis. In other embodiments of the invention, the fibres are wound such that their orientation is between 50° and 80° to the tube axis.

Because the first skin is formed by winding fibres or material around the mandrel, the first skin may be made to have any desirable thickness.

In another embodiment of the invention, the step of winding the first fibres around the mandrel comprises the step of winding a fabric formed from the first fibres around the mandrel.

In such embodiments of the invention rather than using a filament winding method, a material formed from warps and wefts, which the warps and wefts are appropriately orientated may be wound around the mandrel rather than winding tows of fibres around the mandrel.

In embodiments of the invention the first skin has a thickness of between 2mm and 6mm, and a diameter of between 3m and 6m.

The strips may be formed by any desirable method and in the embodiments of the invention, the strips are formed using a pultrusion process.

In such embodiments of the invention, the rotor body may be made particularly efficiently, since both the filament winding method and the pultrusion method may be automated.

As is well known in the art, in a pultrusion method, material is pulled through a dye as it is extruded through the dye. This has the advantage of orientating the fibres axially along the strip. A strip formed from such a method is known as a pultrusion.

Using a pultrusion method means that the strips may be formed to have any desirable dimensions, and in some embodiments of the invention the strips have a thickness of between 1mm and 10mm.

Both the first skin and the pultrusions may be made to any desired length.

In embodiments of the invention, the strips are attached to an outer surface of the first skin.

The strips may be attached by any convenient method. In embodiments of the invention, the strips are attached to the outer surface of the first skin by pressing the strips onto the first fibres before the resin around the first fibres has been cured.

In such embodiments of the invention, the uncured resin will flow around the strips and will bond the strips to the outer surface of the first skin when cured.

In some embodiments of the invention, the strips may be attached to the outer surface of the first skin such that they are spaced apart from one another. In other embodiments of the invention, the strips may be placed on the outer surface of the first skin such that adjacent strips abut one another axially when in position

The first fibres may comprise glass fibres, and the second fibres may comprise glass fibres or carbon fibres.

In embodiments of the invention, the method comprises the further step of forming a second skin by winding third fibres around the strips.

In such embodiments of the invention, the first and second skins together form the rotor tube.

In embodiments of the invention a method of filament winding is used to wind the third fibres around the strips in a similar manner to the method used to wind the first fibres around the mandrel to form the first skin.

In embodiments of the invention, the third fibres are wound around the strips such that the orientation of the third fibres is between 45° and 90° to the tube axis. In other embodiments of the invention, at least some of the third fibres are wound such that their orientation is between 50° and 80° to the tube axis. In some embodiments of the invention, one or more outer layers of the third fibres is wound such that the fibres are oriented at close to 90° to the tube axis, preferably between 88° and 90°; this provides a smoother surface and greater consolidation pressure on the fibres beneath while the resin cures.

In embodiments of the invention, the method comprises the further step of impregnating the third fibres with resin before winding the third fibres around the strips.

In embodiments of the invention, the method comprises the further step of holding the strips in place until the third fibres have been wound around the strips.

In some embodiments of the invention, the step of holding the strips in place comprises the steps of applying one or more straps around the strips, which one or more straps are unwound as the third fibres are wound around the strips.

In such embodiments of the invention, the strips may be attached to an outer surface of the first skin, and an inner surface of the second skin to form a composite material in which the strips are sandwiched between the first and second skins.

In some embodiments of the invention, the strips are attached to both the first and second skins by applying pressure to the first and/or second skins before the skins have cured.

In embodiments of the invention, the resin will flow round the strips and once cured will attach the strips to the first and second skins.

The third fibres may be formed from any convenient material, and in embodiments of the invention the third fibres comprise glass fibres.

In embodiments of the invention, the step of forming the strip comprises the step of forming hollow strips. This increases the thickness of the strips without adding weight, hence enabling the skins to be spaced further apart.

In other embodiments of the invention, the method may comprise the step of attaching the strips to an inner surface of the first skin.

In such embodiments of the invention, the rotor body comprises the first skin and the strips only, and the rotor body does not comprise a second skin.

An advantage of such embodiments of the invention is that fewer process steps may be required in order to make the rotor body.

In such embodiments of the invention, the number of strips attached to the inner surface of the first skin may vary axially. In other words, there may be more or fewer strips along parts of the rotor body. This allows for a variation in the strength of the rotor to suit the variation in bending moment along the length of the rotor body.

In embodiments of the invention, the rotor body may have a length of between 18m and 48m, although it may have any desirable length.

In such embodiments, the rotor body may be formed from a plurality of rotor tubes, each of which rotor tubes having a length of between 6m and 12m.

In such embodiments of the invention where the rotor body comprises a plurality of rotor tubes, the rotor tubes may be joined together by any desirable method to provide a rotor body having the desired length.

In some embodiments of the invention the strips may be of the same length as the rotor tubes, whilst in other embodiments of the invention, such as embodiments where the strips are attached to an inner surface of the skin, and there is no second skin, the strips may be longer than the rotor tubes. In such embodiments of the invention, the strips will span across joints between adjacent rotor tubes, thus adding strength to the rotor body.

According to a second aspect of the present invention there is provided a rotor body forming part of a rotor sail and comprising: a tubular first skin forming a rotor tube and having a tube axis; a plurality of strips extending axially along a surface of the skin, wherein: the first skin is integrally formed from a first fibrous material formed from first fibres, and the strips are formed from a second fibrous material formed from second fibres, at least some of which second fibres extend axially along the rotor body.

In embodiments of the invention the first fibres are orientated at between 45° and 90° to the tube axis, and preferably at between 50° and 80° to the tube axis.

In embodiments of the invention the first skin has a thickness of between 2mm and 6mm, and a diameter of between 3m and 6m.

In embodiments of the invention, the strips may have a thickness of between 1mm and 10mm.

In embodiments of the invention the strips extend along an outer surface of the first skin.

In embodiments of the invention, the first and second fibres are glass fibres.

In other embodiments of the invention the first fibres may be glass fibres and the second fibres may be carbon fibres.

In embodiments of the invention the rotor body comprises a second, integrally formed skin formed from a third fibrous material, at least some of which third fibres are orientated at between 45 and 90 degrees to the tube axis, and optionally at between 50 and 80 degrees to the tube axis, wherein the first and second skins together form the rotor tube.

In embodiments of the invention, third fibres in one or more outer layers of third fibres are orientated at close to 90 degrees to the tube axis, optionally between 88 degrees and 90 degrees to the tube axis.

In embodiments of the invention, the third fibres may comprise glass fibres.

In embodiments of the invention, the strips comprise hollow strips. This increases the thickness of the strips without adding weight, hence enabling the skins to be spaced further apart.

In embodiments of the invention, the strips may extend along an inner surface of the first skin. In such embodiments of the invention, the rotor body comprises the first skin and the strips only, and the rotor body does not comprise the second skin.

In embodiments of the invention, the number of strips may vary along the length of the rotor body. This allows for a variation in the strength of the rotor to suit the variation in the bending moment along the length of the rotor body.

In embodiments of the invention the rotor body comprises a plurality of rotor tubes, which rotor tubes are joined together to form the rotor body.

In such embodiments, the rotor body may be made with any desirable length by joining together an appropriate number of rotor tubes.

In embodiments of the invention in which the strips extend along an inner surface of the first skin, and there is no second skin at least some of the strips may span joints between adjacent rotor tubes.

According to a third aspect of the present invention there is provided a rotor body according to embodiments of the second aspect of the invention formed using a method according to embodiments of the first aspect of the invention.

According to a fourth aspect of the present invention there is provided a vessel, which vessel comprises a rotor sail attached to a portion of the vessel, which rotor sail comprises a rotor body according to embodiments of the first and third aspect of the invention.

### Brief Description of the Drawings

The invention will now be described by way of example only with reference to the accompanying drawings in which:
Figure 1 is a schematic representation of a rotor sail comprising a rotor body according to an embodiment of the second aspect of the invention;
Figure 2 is a schematic representation of a first skin being formed by a method step according to an embodiment of the first aspect of the invention;
Figure 3 is a schematic representation of a plurality of strips being attached to a first skin according to an embodiment of the first aspect of the invention;
Figure 4 is a schematic representation of a plurality of strips attached to a first skin according to an embodiment of the first aspect of the invention;
Figure 5 is a schematic representation of a second skin being formed by a method step according to an embodiment of the first aspect of the invention;
Figure 6 is a schematic representation of a rotor body formed by the method shown in Figure 5;
Figures 7 to 10 are schematic representations of rotor bodies, according to embodiments of the second aspect of the invention, comprising solid strips;
Figures 11 to 13 are schematic representations of means for joining two rotor body parts according to embodiments of the second aspect of the invention, that comprise tapered edges;
Figures 14 and 15 are schematic representations of methods of forming the tapered edges shown in Figures 11 to 13;
Figure 16 is a schematic representation of a plurality of rotor body parts, according to embodiments of the second aspect of the invention, joined together by means such as those shown in Figures 11 to 13;
Figures 17 and 18 are schematic representations of further means for joining two rotor body parts, according to embodiments of the second aspect of the invention, that comprise tapered edges;
Figure 19 is a schematic representation of a plurality of rotor bodies, according to embodiments of the second aspect of the invention, joined together by means such as those shown in Figures 17 and 18;
Figures 20 to 22 are schematic representations of rotor bodies, according to embodiments of the second aspect of the invention, comprising hollow strips;
Figure 23 is a schematic representation of means for joining two of the rotor bodies shown in Figures 20 to 22;
Figure 24 is a schematic representation of a rotor body, according to an embodiment of the second aspect of the invention, comprising spaced strips;
Figure 25 is a schematic representation of means for joining two of the rotor body shown in Figure 24; and,
Figure 26 is a schematic representation of a further means of joining two rotor bodies according to an embodiment of the second aspect of the invention.

### Detailed Description

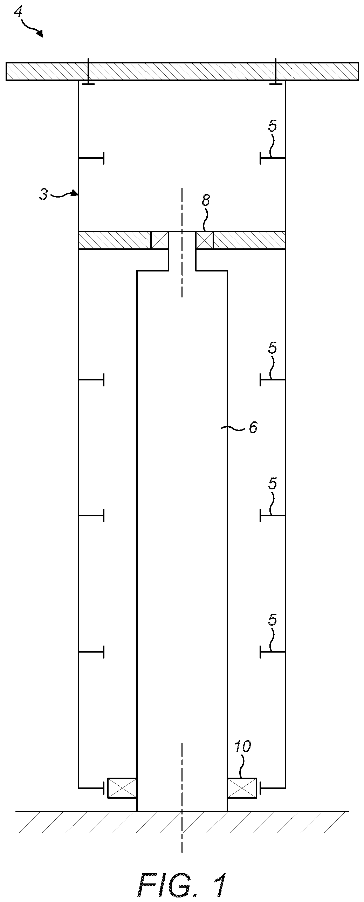

Referring initially to Figure 1, an example of a rotor sail, or Flettner rotor, is shown wherein the rotor sail is defined generally by the reference numeral 4. The rotor sail comprises a rotor body 3 rotatably mounted to a static cylinder 6 via upper bearings 8 and lower bearings 10. The rotor body 3 comprises a plurality of circumferential ribs 5 which reinforce the rotor body 3 to provide circumferential bending strength and stiffness. In this example the circumferential ribs 5 are attached to the inside of the rotor body 3, although circumferential ribs may also be attached to the outside of a rotor body.

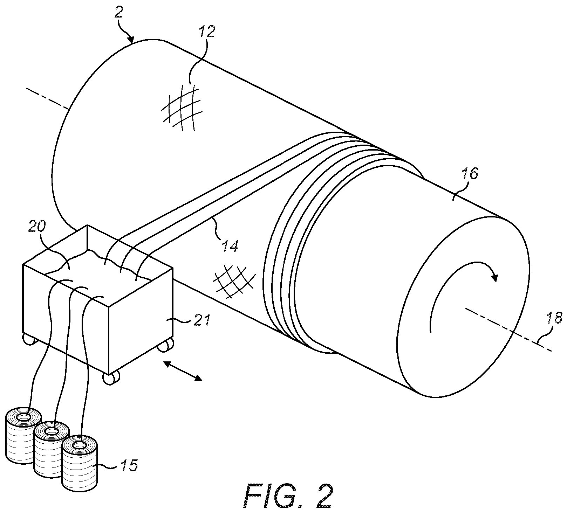

Figure 2 shows the step of winding, or filament winding, first fibres around a mandrel 16 to form a tubular first skin 12 forming a rotor tube 2 having a tube axis 18. A rotor body may be formed of a single rotor tube 2 or of a plurality of rotor tubes 2 joined together coaxially.

In this embodiment of the invention, the first fibres are bundled to form a first fibre tow 14 which is dispensed from a first fibre tow spool 15, passed through a resin bath 21 to be coated in resin 20 and then wound around the mandrel 16. The first fibre tow 14 is guided up and down the length of the mandrel 16, parallel to the tube axis 18, as it is wound onto the mandrel, thereby gradually forming the tubular first skin as layers of the first fibre stack on top of one another. The winding process may be continued until the first skin is formed with a desired thickness, between 2 and 4 mm for example. To reduce the time required to form the first skin 12, multiple first fibre tows 14 are dispensed, coated and wound simultaneously.

The first fibres may be any suitable material such as carbon, aramid, basalt, E-glass, S-glass or ECR-glass for example. Similarly, the resin may be any suitable type of resin, such as epoxy resin, vinylester resin, polyester resin, polyurethane resin or acrylic resin, for example. Resins may be thermoset or thermoplastic and may be cured at ambient temperature or at elevated temperature to suit the required speed of the process and the eventual strength and temperature resistance required of a rotor body in use forming part of a rotor sail. For example, the resin may be an epoxy resin which cures to become a solid after several minutes or hours at ambient temperature, allowing the winding process to be conducted conveniently at ambient temperature and the rotor tube to be later removed from the mandrel after the resin has solidified. The resin and any adhesive used in the manufacture of the rotor body may then be further cured (post-cured) by elevating the temperature of the complete rotor body to increase the degree of cure of the resin and further improve its strength and temperature resistance.

The orientation of the first fibres in the first skin 12 is determined by the orientation at which the first fibre tows 14 are wound on to the mandrel 16 relative to the tube axis 18. This orientation may be varied by varying the speed at which the first fibre tows are guided up and down the length of the mandrel 16 relative to the speed at which the mandrel 16 is rotated to wind the first fibre tows 14 on to it.

The mandrel 16 may be tapered to facilitate removal of the first skin 12 from the mandrel 16, after the resin 20 has cured. The first skin 12 may therefore be frustrum shaped rather than cylindrical.

In embodiments of the invention, the first fibre tows 14 are orientated at between 45 and 90 degrees to the tube axis 18. For example, the first fibre tows 14 could be orientated at a mixture of orientations such as some being wound at +/- 45 degrees and some being wound at close to 90 degrees (e.g., +/- 88 degrees).

In embodiments of the invention, the first fibre tows are orientated at between 50 and 80 degrees. For example, the first fibre tows 14 could all be wound at around +/- 70 degrees. This would allow the first fibre tows 14 to be guided up and down the length of the mandrel 16 at a constant speed throughout the process of forming the first skin 12, facilitate a greater degree of automation and also allow the mandrel 16 to rotate faster than if the fibre tows 14 were wound at +/-45 degrees.

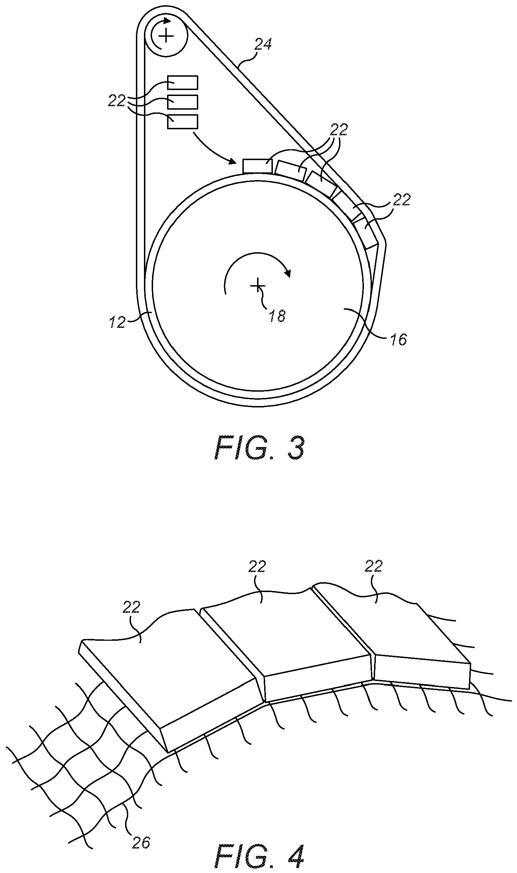

Figure 3 shows the step of attaching a plurality of strips 22 to the first skin 12. The strips 22 are formed from second fibres and are attached to the first skin 12 such that at least some of the second fibres extend axially along the first skin 12, i.e. parallel to the tube axis 18. The second fibres may be any suitable material such as carbon, aramid, basalt, E-glass, S-glass or ECR-glass for example. Each strip 22 may be formed using a pultrusion process.

In this embodiment of the invention, the strips 22 are positioned on the outer surface of the first skin 12 while the resin forming part of the first skin 12 is still curing so that the strips 22 may bond to the first skin 12 as the resin cures. In order to ensure that the plurality of strips 22 remain in position until they are attached to the first skin 12, a temporary strap assembly 24 may be used to retain the plurality of strips 22 in contact with the first skin 12 as it rotates around the mandrel 16 to allow further strips 22 to be positioned.

In other embodiments of the invention the plurality of strips may be pre-bonded to a backing scrim 26 as shown in Figure 4. The plurality of strips 22 may therefore be attached to the first skin 12 as a single assembly rather than as individual strips. This is analogous to mosaic tiles for bathrooms and kitchens, for example, which are mounted to a backing layer so that the tiles can be applied to a wall in large sheets rather than individual tiles.

Using a backing scrim 26 may simplify the attachment of strips 22 to the first skin 12. However, the process of pre-bonding the strips 22 to the backing scrim 26 requires an additional process step which is not required in the method demonstrated in Figure 3.

In further embodiments of the invention the strips may be held in place on the first skin with rigid or flexible jigs which are adapted to ensure desired spacing of the strips around the circumference of the first skin (either on its internal or external surface).

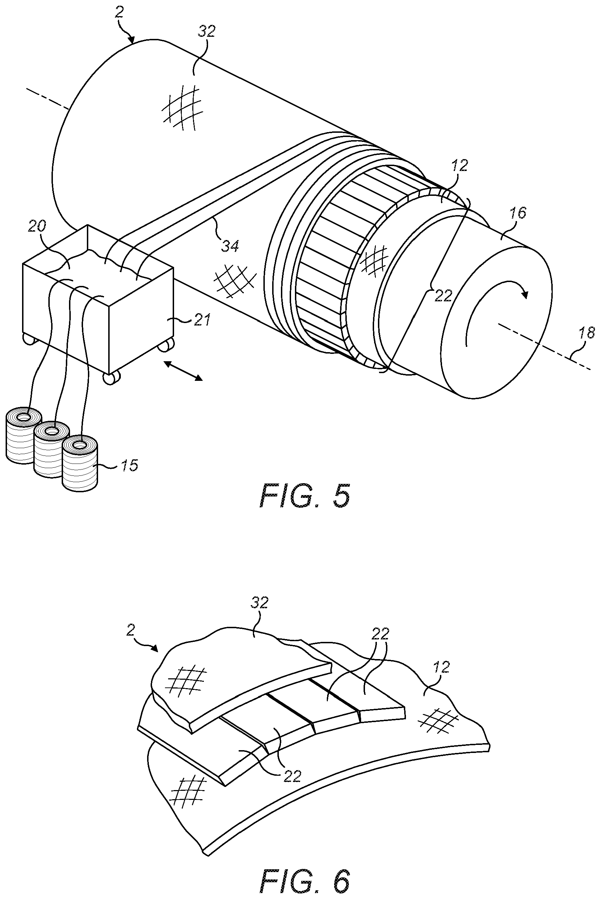

In Figure 5, a second skin 32 is formed by winding third fibres around the plurality of strips 22 once they are all positioned on the first skin 12. The second skin 32 forms the rotor tube 2 together with the first skin 12. Similarly to the first fibres, the third fibres are bundled to form a third fibre tow 34 which is dispensed from a third fibre tow spool 35, passed through a resin bath 21 to be coated in resin 20 and then wound around the plurality of strips 22. The third fibres may be any suitable material such as carbon, aramid, basalt, E-glass, S-glass or ECR-glass for example.

Initially, a temporary strap assembly (such as the temporary strap assembly 24 shown in Figure 3) may hold the strips 22 in place until a sufficient quantity of the second skin 32 is formed to hold the strips 22 without requiring additional support. If a plurality of straps is used along the length of the body in the temporary strap assembly the straps may be removed one by one as the second skin 32 is formed.

The winding process may be continued until the second skin 32 is formed with a desired thickness, between 2 and 4 mm for example. To reduce the time required to form the second skin 32, multiple third fibre tows 34 may be dispensed, coated and wound simultaneously, similarly to the first fibre tows 14 (as shown in Figure 2).

Although not included in this embodiment of the invention, in other embodiments of the invention external circumferential ribs may be incorporated into the second skin 32 by winding a pile of third fibres at 90 degrees to the tube axis 18 and at intervals along the length of the rotor tube 2. In further embodiments of the invention, circumferential ribs may be formed separately to the rotor tube 2 and bonded to either the first 12 or second skin 32.

In order to provide a smooth outer surface to the second skin 32 and maximise consolidation pressure on the layers of fibres beneath, the outermost layers of third fibres (forming the outermost 0.5 mm of the second skin, for example) may be formed wherein the third fibre tows 34 are orientated at close to 90 degrees to the tube axis 18 (e.g. +/-88 degrees).

The resin 20 coating the third fibre tows 34 may also soak onto the strips 22 as it cures, thereby bonding the second skin 32 to the plurality of strips 22, similarly to the first skin 12.

Once the resin 20 throughout the different layers of first, second and third fibres has cured, the rotor tube 2 may be removed from the mandrel 16.

Referring now to Figure 6, a rotor tube 2 is shown comprising a first skin 12, formed as shown in Figure 2; a layer of strips 22, attached to the first skin 12 as shown in Figure 3; and a second skin 32, formed as shown in Figure 5. The rotor tube 2 may form part of a rotor body according to an embodiment of the second aspect of the invention which may, in turn, form part of a rotor sail such as the rotor sail shown in Figure 1.

The first and second skins 12, 32, with first and third fibres orientated at between 45 and 90 degrees to the tube axis, provide the rotor tube 2 with strength in a circumferential/hoop direction, normal to the tube axis, so that a rotor body comprising one or more of the rotor tubes 2 may maintain its circular cross-sectional shape when in use forming part of a rotor sail. Meanwhile, the strips 22 comprising second fibres, at least some of which are orientated parallel to the tube axis, provide the rotor tube 2 with strength in the axial direction, parallel to the tube axis, so that in use the rotor body comprising the rotor tube 2 may withstand bending forces caused by pressure from the wind.

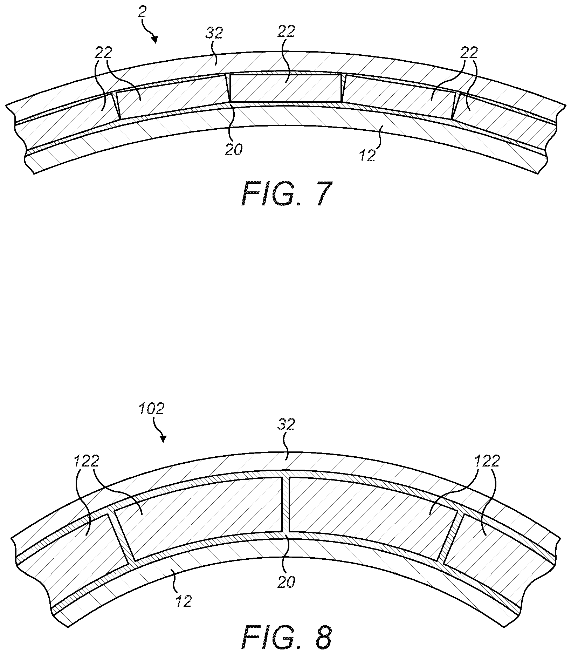

Referring now to Figure 7, the rotor tube 2 is shown in cross-section. Each strip 22 is substantially rectangular in cross-sectional shape with edges abutting against the edges of adjacent strips 22. Resin 20 fills any gaps between adjacent strips 22 and between the first skin 12, plurality of strips 22 and second skin 32 and acts to bond the first skin 12, plurality of strips 22 and second skin 32 together.

Although the resin 20 bonds the various components of the rotor tube together, reducing the amount of resin used may advantageously reduce material costs and the resultant weight of the rotor tube. It may therefore be preferable to avoid using resin in excess of that which is needed for bonding the layers of the rotor tube together.

Accordingly, Figure 8 shows a rotor tube 102 similar to the rotor tube 2 shown in Figure 7 except that each of a plurality of strips 122 is arcuate in cross-sectional shape so that the strips 122 may fit more closely to the first and second skins 12, 32. Also, the edges of the strips 122 are angled so that each strip may fit more closely to the adjacent strips. The spaces between adjacent strips 122 and between the first skin 12, plurality of strips 122 and second skin 32 is therefore reduced in comparison to the rotor tube 2 shown in Figure 7 so less resin 20 may be required to fill the spaces and bond the parts together. The rotor tube 102 may therefore be manufactured with lower material cost and with a lower weight.

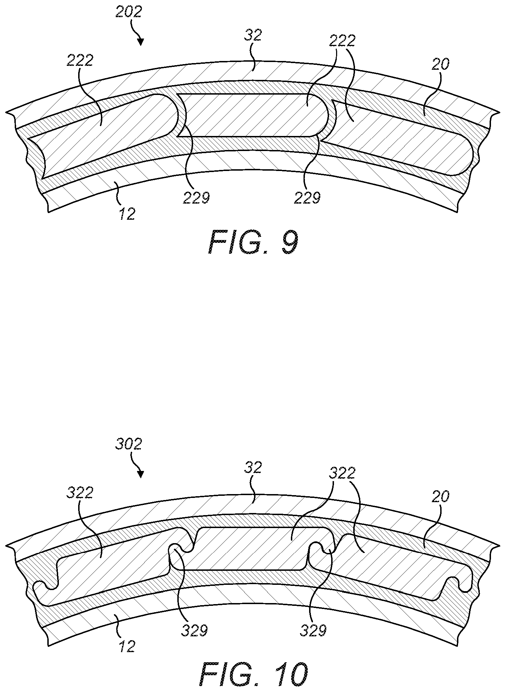

The strips may also be shaped to improve the ease with which they are attached to the first skin 12 and held there while the second skin is formed. For example, in Figure 9 a rotor tube 202 which may form part of a rotor body according to another embodiment of the second aspect of the invention is shown that comprises a plurality of strips 222. Each strip 222 has profiled edges 229 shaped to nest against the profiled edges 229 of adjacent strips 222. Each strip 222 thereby encourages its adjacent strips 222 to stay in position which may reduce the burden on temporary straps 24 (shown in Figure 3) or the second skin 32 (shown in Figure 5) to hold the strips 222 in place.

Similarly, in Figure 10 a rotor tube 302 is shown that comprises a plurality of strips 322 comprising profiled edges 329 that interlock with the profiled edges 329 of adjacent strips 322.

A rotor sail may require its rotor body to be between 18 and 48 m in length whereas the winding process may be limited to forming rotor tubes that are between 6 and 15 m in length. Therefore, in embodiments of the invention, two or more rotor tubes may be joined together coaxially with one another to form a single rotor body suitable for forming part of a rotor sail.

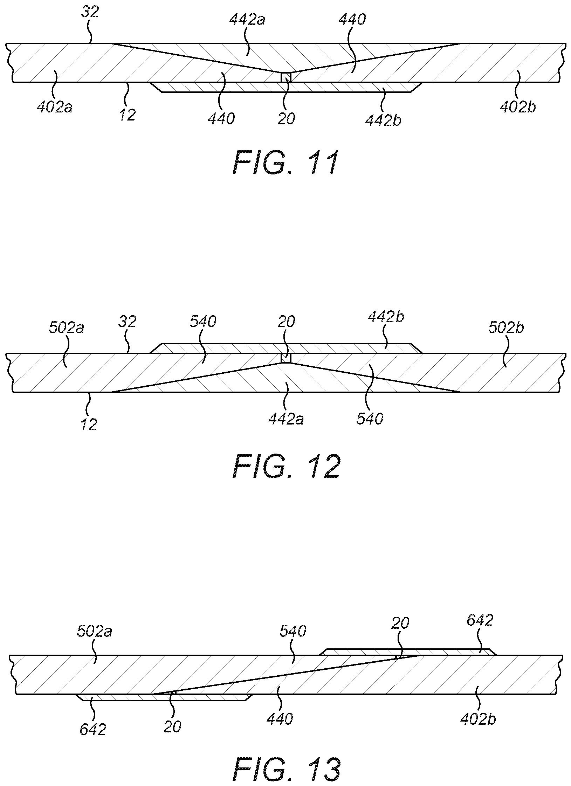

Two rotor tubes which may form part of a rotor body according to an embodiment of the second aspect of the invention may be joined by any suitable means. For example, in Figure 11, an end of a first rotor tube 402a and an end of a second rotor tube 402b, which is equal in diameter to the end of the first rotor tube 402a, are abutted against one another. The abutted edges of the first and second rotor tubes 402a and 402b are bonded together with resin or adhesive 20.

To reduce stress concentrations in the resin 20 connecting the parts together, the ends of the of the rotor tubes 402a, 402b are tapered in laminate thickness, laminate thickness being the combined thickness of the first skin, layer of strips and second skin. In this embodiment of the invention each rotor tube 402a, 402b comprises a tapered edge 440 wherein the laminate thickness of each rotor tube 402a, 402b is tapered from the outer second skin 32 towards the inner first skin 12. A wedge-shaped first joining part 442a fills a groove formed by the tapered edges 440 while a flat second joining part 442b covers the join and adjacent portions of the first skin 12 of each rotor tube 402a, 402b.

The joining pieces 442a, 442b may be laminated and cured directly onto the rotor tubes 402a, 402b being joined or laminated and cured separately before being bonded onto the rotor tubes 402a, 402b with structural adhesive.

In Figure 12, two rotor tubes 502a, 502b are joined similarly to the rotor tubes 402a, 402b shown in Figure 11 except the rotor tubes 502a, 502b comprise tapered edges 540 wherein the laminate thickness of each rotor tube 502a, 502b is tapered from the inner first skin 12 towards the outer second skin 32. The joining pieces 442a, 442b are accordingly reversed so that the wedge-shaped first joining part 442a is positioned on the inner surfaces of the rotor tubes 502a, 502b and the flat second joining piece 442b is positioned on the outer surfaces of the rotor tubes 502a, 502b.

In Figure 13, the first rotor tube 502a shown in Figure 12 is joined to the second rotor tube 402a shown in Figure 11. The tapered edges 440, 540 therefore abut against one another, obviating the need for a wedge-shaped joining piece and allowing two flat joining pieces 642 to be used.

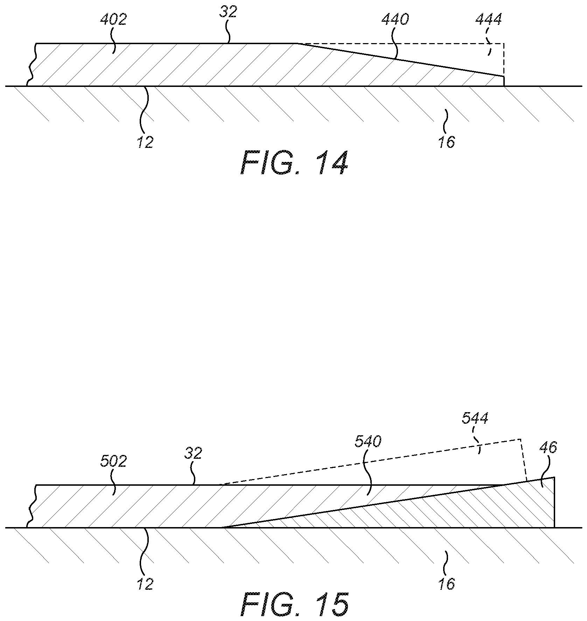

Tapering of the laminate thickness from the outer surface, to form the tapered edge 440 shown in Figure 11, may be achieved by grinding the rotor tube 402 to a taper after curing but while it is still supported internally by the mandrel 16, as shown in Figure 14. Hence, an outer section 444 is removed from the rotor tube 402.

Where an internal taper is required, to form the tapered edge 540 shown in Figure 12 for example, this can be achieved by winding the rotor tube 502 over a wedge-shaped part 46 on the mandrel 16, as shown in Figure 15. The rotor tube 502 may then be ground from the outside to remove an outer section 544 and leave the tapered edge 540.

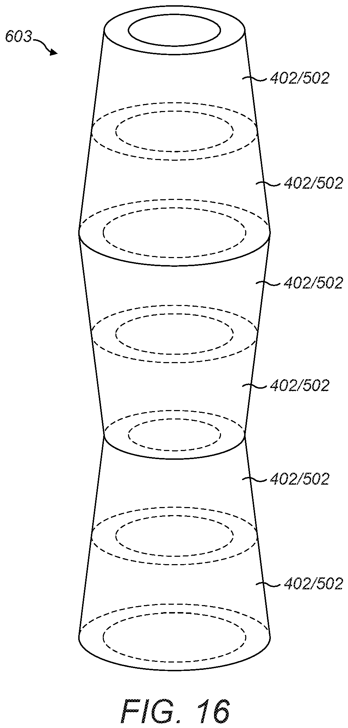

In Figure 16 a rotor body 603 suitable for forming part of a rotor sail comprises six rotor tubes 402, 502 joined to one another as shown in Figures 11 to 13. Each rotor tube 402, 502 is frustrum shaped due to the taper of the mandrel on which they were each formed. To ensure that ends of equal diameter are joined together to facilitate the joining means shown in Figures 11 to 13, some of the rotor tubes 402, 502 are orientated with the taper in the opposite direction to the taper of other rotor tubes 402, 502.

However, in other embodiments of the invention, rotor tubes may be joined together such that they overlap with one another.

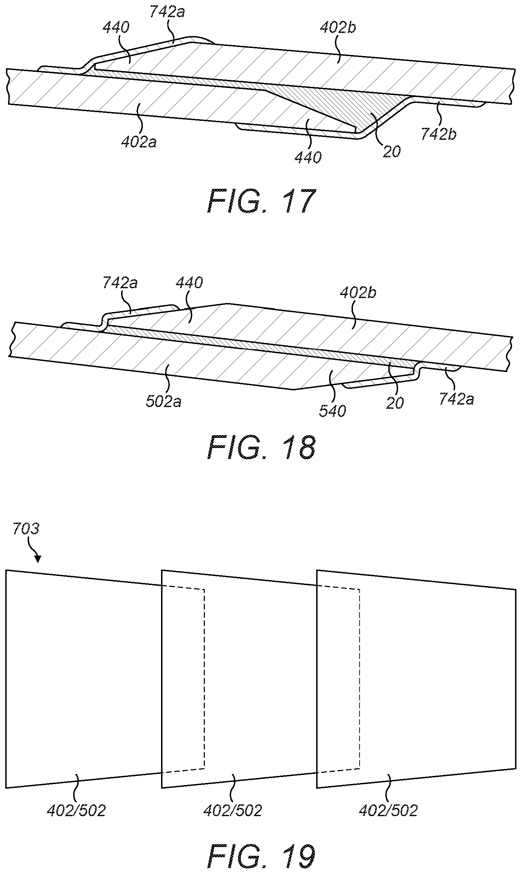

In Figure 17, an end of a first rotor tube 402a is received within the end of a second rotor tube 402b which has a slightly larger diameter than the end of the first rotor tube 402a. The ends are bonded with resin or adhesive 20, similarly to the joined ends in Figures 11 to 13, and first and second joining pieces 742a and 742b cover the inner and outer surfaces of the join.

In Figure 18, a first rotor tube 502a is joined to a second rotor tube 402b similarly to that shown in Figure 17 except that the first rotor body comprises a tapered edge 540 which is tapered to avoid a large space existing between the first and second rotor tubes 502a, 402b that requires filling with resin or adhesive 20. Hence the rotor tubes 502a, 402b may be joined with lower material cost and requiring less additional weight to be added.

Rotor tubes 402, 502 joined as shown in Figures 17 and 18 may form a rotor body 703 such as that shown in Figure 19.

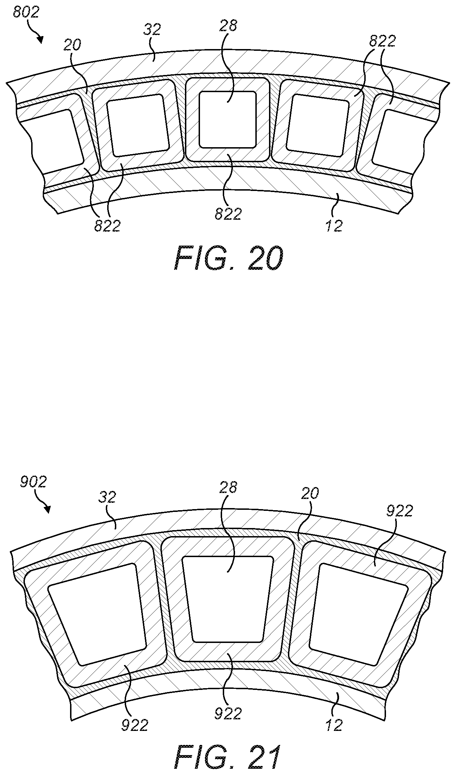

Referring now to Figure 20, a rotor tube 802, which may form part of a rotor body according to another embodiment of the second aspect of the invention, comprises a plurality of strips 822. The rotor tube 802 is similar to the rotor tube 2 shown in Figure 7 except that each strip 822 is a hollow strip comprising a void space 28.

Due to the void space in each strip, the strips may be formed with a greater cross-sectional area despite using the same quantity of material and hence having the same weight. The first and second skins 12, 32 may therefore be spaced further apart in rotor tube 802 compared to the skins of rotor tube 2 shown in Figure 7. The increased spacing of the first and second skins 12, 32 may increase the circumferential bending strength and stiffness of the rotor tube 802 without adding the parasitic cost or weight of a foam core nor increasing the material cost or weight of the strips. With this increased bending strength and stiffness the need for circumferential ribs can be avoided.

In Figure 21, a rotor tube 902 is similar to the rotor tube 802 except that it comprises a plurality of strips 922 which are trapezoidal in cross section. In other words the edges of the strips 922 which abut against the edges of other strips are angled so that the spacing between strips may be reduced and the amount of resin 20 required to fill the spaces is also reduced.

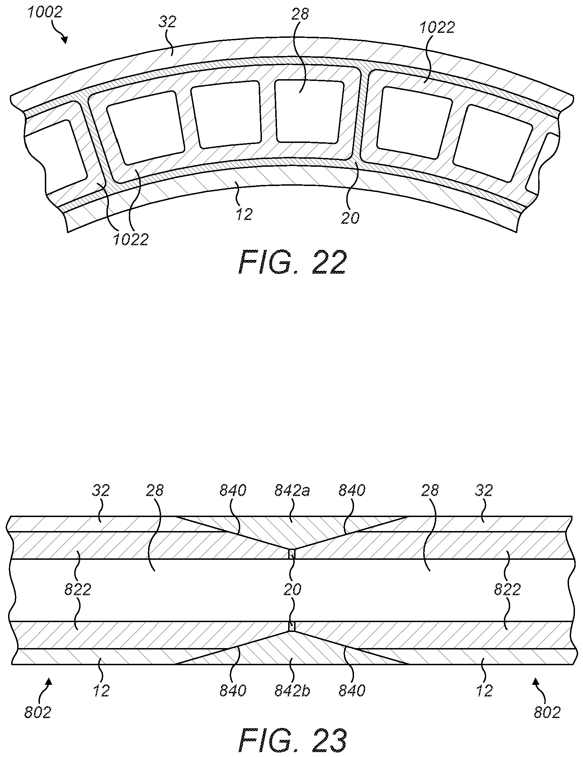

In Figure 22, a rotor tube 1002 is similar to the rotor tubes 802 and 902 shown in Figures 20 and 21 except that each strip is wider and comprises a plurality of void spaces 28. This further increases the efficiency of material required to form the strips 1022 without sacrificing the shear strength of the strips 1022. Each strip may be formed with angled edges similarly to the strips 922 shown in Figure 21 and may further be formed with an arcuate cross-section similarly 122 shown in Figure 8, thereby reducing spacing present in the rotor tube 1002 and reducing the amount of resin 20 required.

Two rotor tubes with hollow strips, such as those shown in Figures 20, 21 and 22 may be joined similarly to the ways shown in Figures 11, 12 and 13 for rotor tubes with solid strips. However, when joining rotor tubes with hollow strips it may be preferable that the void spaces are sealed to ensure stability of the rotor body comprising the joined rotor tubes when it is in use forming part of a rotor sail.

In Figure 23, two rotor tubes 802 are joined (although similar means may be used for joining rotor tubes 902 and 1002). Due to the increased laminate thickness of the rotor tubes 802, a taper that extends substantially from the first skin 12 to the second skin 32 would need to be long and require the removal of a large quantity of material. Rather than doing this, each rotor tube comprises two tapered edges 840, one tapering from the first skin 12 and one from the second skin 32. None of the tapered edges 840 extend into the void space 28 to ensure that the void space may be sealed with minimal amounts of resin 20. Wedge-shaped first and second joining pieces 842a, 842b similar to those shown in Figures 11 and 12 are applied to each side of the join.

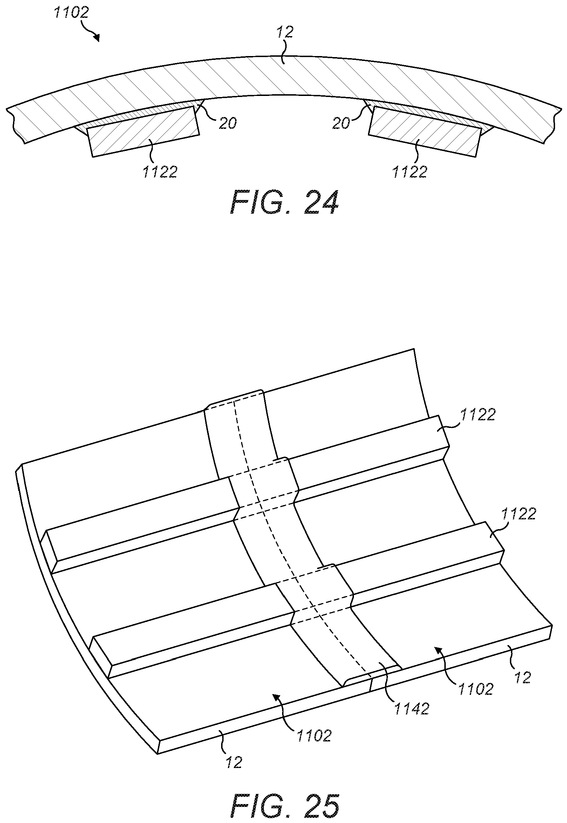

Referring now to Figure 24, a rotor tube 1102 which may form part of a rotor body according to another embodiment of the second aspect of the invention is shown. The rotor tube 1102 comprises a first skin 12and no second skin.

In this embodiment of the invention, the first skin 12 may be made according to the method shown in Figure 2 and removed from the mandrel. A plurality of strips 1122 are added afterwards, onto the internal surface of the first skin 12 rather than the outer surface as in previously described embodiments of the invention. As the resin in first skin 16 is required to cure in order to remove it from the mandrel, the strips 1122 are bonded in place with a structural adhesive 20.

Advantageously, the winding can be done in a single operation, removing the need to hold strips in place before a second skin has been wound. Further, the quantity of axial material can be more easily varied along the length of the rotor (by adding more strips locally) to match variations in the bending moment, thereby minimising the total weight and cost of the axial material.

Also, more expensive carbon fibre strips of practical thickness can be used cost effectively instead of glass fibre, because they can be spread apart rather than abutted in a continuous layer. In a continuous layer only around 1-2mm thickness of carbon fibre is required on a 5m diameter rotor body, which means previously described embodiments of the invention would barely benefit from having the pultrusions to separate the first and second skins for good bending strength. In this embodiment of the invention, narrower strips can be used, for example, with dimensions of 50 mm width, 5 mm thick, and with 150 mm gaps in between. Carbon fibre is advantageous because it is stronger and lighter and in particular carbon fibre has a better resistance to fatigue than glass fibre. The strength advantage of carbon fibre is particularly significant when it is pultruded as the fibre straightness is beneficial. Thus, using carbon fibre in the axial direction of a rotor sail according to embodiments of the invention can be more cost effective than using glass fibre, even though carbon fibre material is more expensive per kg.

Additionally, filament winding machines typically have a maximum mandrel length which is less than the desired length of a rotor body for use forming part of a rotor sail. Therefore several rotor bodies according to embodiments of the second aspect of the invention may need to be joined together, and the joints between them need to carry the full axial load. In the embodiment of the invention shown in Figure 24, a plurality of rotor tubes 1102 can be joined before the strips 1122 are bonded on. The strips 1122 are then continuous across each joint, as shown in Fig 25, providing the necessary axial strength while the first skins 12 and joining piece 1142 applied across the joints only needs to transmit the relatively lower shear forces easily accommodated by a few millimetres thickness of biaxial (+/-45 degree) material.

However, without the pultrusion in the middle of two skins, the required thickness of the first skin 12 for circumferential bending strength must be made up using more first fibre. In other words, the first skin 12 must be thicker. Further, a second step of bonding the pultrusions to the first skin 12 is necessary and a large amount of adhesive 20 is required which adds cost and weight.

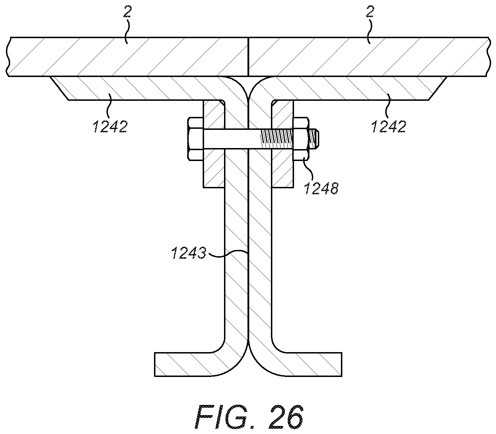

Referring now to Figure 26, a further means of joining two rotor tubes is shown. This joining means may be applied to any of the tubes shown in Figures 6 to 25, although rotor tubes 2 shown in Figure 7 are used as an example. A joining piece 1242 is bonded to each of the rotor tubes 2 to be joined using adhesive (not shown). Each joining piece 1242 comprises a radial surface 1243 adapted to abut against the radial surface of the other joining piece 1242. The two joining pieces 1242 are then bolted together using a bolt assembly 1248.

An advantage of this joining means is that it permits disassembly of a rotor body for transport and can be adapted to incorporate circumferential ribs such as the circumferential ribs 5 shown in Figure 1.

## Claims

1. A method of manufacturing a rotor body (3) forming part of a rotor sail (4), the method being **characterised by** comprising the steps of:
winding first fibres around a mandrel (16) to form a tubular first skin (12) forming a rotor tube (2) having a tube axis (18);
forming a plurality of strips (22) from second fibres;
attaching the strips to a surface of the first skin such that at least some of the second fibres extend axially along the rotor body.

2. A method as claimed in claim 1, wherein the step of winding first fibres comprises the step of winding the first fibres such that they are orientated at between 45 and 90 degrees, and preferably at between 50 and 80 degrees to the tube axis (18).

3. A method as claimed in claim 1 or claim 2, comprising the further step of impregnating the first fibres with resin (20) before winding the fibres around the mandrel (16).

4. A method as claimed in any one of the preceding claims, wherein the step of winding first fibres comprises the step of winding a material formed from the first fibres around the mandrel (16).

5. A method as claimed in any one of the preceding claims, wherein the strips are formed using a pultrusion process.

6. A method as claimed in any one of the preceding claims, wherein the step of attaching the strips (22) comprises the step of attaching the strips to an outer surface of the first skin (12), and preferably wherein the step of attaching the strips (22) comprises the step of pressing the strips onto the first fibres before the resin (20) between the first fibres have been cured.

7. A method as claimed in any one of the preceding claims, comprising the further step of forming a second skin (32) by winding third fibres around the strips (22), wherein the first (12) and second skins together form the rotor tube (2), and preferably wherein the step of winding third fibres comprises winding at least some of the third fibres such that they are orientated at between 45 and 90 degrees to the tube axis (18), and optionally at between 50 and 80 degrees to the tube axis, and/or winding one or more outer layers of third fibres such that the third fibres are orientated at close to 90 degrees to the tube axis (18), and preferably between 88 degrees and 90 degrees to the tube axis.

8. A method as claimed in any one of claims 1 to 5, wherein the step of attaching the strips (22) comprises the step of attaching the strips to an inner surface of the first skin (12).

9. A method as claimed in any one of the preceding claims, comprising the step of forming a plurality of rotor tubes (2) and joining adjacent rotor tubes together to form the rotor body (3).

10. A method according to claim 9 when dependent on claim 8, comprising the step of forming the strips (22) such that they span joints between adjacent rotor tubes (2).

11. A method as claimed in claim 8 or any claim dependent thereon, comprising the further step of axially varying the number of strips (22) attached to the inner surface of the first skin (12).

12. A rotor body (3) forming part of a rotor (4) sail and comprising:
a tubular first skin (12) forming a rotor tube (2) and having a tube axis (18); the rotor body (3) being **characterised in that** it comprises
a plurality of strips (22) extending axially along a surface of the skin, wherein the first skin is integrally formed from a first fibrous material formed from first fibres, the strips are formed from a second fibrous material formed from second fibres, and at least some of which second fibres extend axially along the rotor body.

13. A rotor body (3) as claimed in claim 12, wherein the rotor body comprises a second, integrally formed skin (32) formed from a third fibrous material formed from third fibres, at least some of which third fibres are orientated at between 45 and 90 degrees to the tube axis (18), and preferably at between 50 and 80 degrees to the tube axis, wherein the first and second skins together form the rotor tube (2), and further preferably wherein third fibres in one or more outer layers of third fibres are orientated at close to 90 degrees to the tube axis, optionally between 88 degrees and 90 degrees to the tube axis.

14. A rotor body (3) as claimed in any one of claims 12 to 13, formed using a method according to any one of claims 1 to 11.

15. A vessel comprising a rotor sail (4) attached to a portion of the vessel, which rotor sail comprises a rotor body (3) according to any one of claims 12 to 13.

## Patentansprüche

1. Verfahren zur Herstellung eines Rotorkörpers (3), der einen Teil eines Rotorsegels (4) bildet,
wobei das Verfahren **dadurch gekennzeichnet ist, dass** es die folgenden Schritte umfasst:
Wickeln erster Fasern um einen Wickelkern (16), um eine rohrförmige erste Haut (12) zu bilden, die ein Rotorrohr (2) mit einer Rohrachse (18) bildet;
Bilden einer Vielzahl von Streifen (22) aus zweiten Fasern;
Anbringen der Streifen an einer Oberfläche der ersten Haut, sodass sich zumindest einige der zweiten Fasern axial entlang des Rotorkörpers erstrecken.

2. Verfahren nach Anspruch 1, wobei der Schritt des Wickelns der ersten Fasern den Schritt des Wickelns der ersten Fasern so umfasst, dass sie zwischen 45 und 90 Grad und vorzugsweise zwischen 50 und 80 Grad zur Rohrachse (18) ausgerichtet sind.

3. Verfahren nach Anspruch 1 oder Anspruch 2, umfassend den weiteren Schritt des Imprägnierens der ersten Fasern mit Harz (20) vor dem Wickeln der Fasern um den Wickelkern (16).

4. Verfahren nach irgendeinem der vorhergehenden Ansprüche, wobei der Schritt des Wickelns der ersten Fasern den Schritt des Wickelns eines aus den ersten Fasern gebildeten Materials um den Wickelkern (16) umfasst.

5. Verfahren nach irgendeinem der vorhergehenden Ansprüche, wobei die Streifen unter Verwendung eines Pultrusionsprozesses gebildet werden.

6. Verfahren nach irgendeinem der vorhergehenden Ansprüche, wobei der Schritt des Anbringens der Streifen (22) den Schritt des Anbringens der Streifen an einer Außenoberfläche der ersten Haut (12) umfasst, und wobei der Schritt des Anbringens der Streifen (22) vorzugsweise den Schritt des Anpressens der Streifen auf die ersten Fasern umfasst, bevor das Harz (20) zwischen den ersten Fasern ausgehärtet ist.

7. Verfahren nach irgendeinem der vorhergehenden Ansprüche, umfassend den weiteren Schritt des Bildens einer zweiten Haut (32) durch Wickeln dritter Fasern um die Streifen (22), wobei die erste (12) und die zweite Haut zusammen das Rotorrohr (2) bilden, und wobei der Schritt des Wickelns dritter Fasern vorzugsweise das Wickeln mindestens einiger der dritten Fasern umfasst, sodass sie zwischen 45 und 90 Grad zur Rohrachse (18), und optional zwischen 50 und 80 Grad zur Rohrachse ausgerichtet sind, und/oder das Wickeln einer oder mehrerer Außenschichten aus dritten Fasern, sodass die dritten Fasern bei nahezu 90 Grad zur Rohrachse (18) und vorzugsweise zwischen 88 Grad und 90 Grad zur Rohrachse ausgerichtet sind.

8. Verfahren nach irgendeinem der Ansprüche 1 bis 5, wobei der Schritt des Anbringens der Streifen (22) den Schritt des Anbringens der Streifen an einer Innenoberfläche der ersten Haut (12) umfasst.

9. Verfahren nach irgendeinem der vorhergehenden Ansprüche, umfassend den Schritt des Bildens einer Vielzahl von Rotorrohren (2) und des Verbindens benachbarter Rotorrohre miteinander, um den Rotorkörper (3) zu bilden.

10. Verfahren nach Anspruch 9, wenn es von Anspruch 8 abhängt, umfassend den Schritt des Bildens der Streifen (22), sodass sie Verbindungen zwischen benachbarten Rotorrohren (2) überspannen.

11. Verfahren nach Anspruch 8 oder irgendeinem davon abhängigen Anspruch, umfassend den weiteren Schritt des axialen Variierens der Anzahl von Streifen (22), die an der Innenoberfläche der ersten Haut (12) angebracht sind.

12. Rotorkörper (3), der einen Teil eines Rotorsegels (4) bildet und Folgendes umfasst:
eine rohrförmige erste Haut (12), die ein Rotorrohr (2) bildet und eine Rohrachse (18) aufweist; wobei der Rotorkörper (3) **dadurch gekennzeichnet ist,**
**dass** er eine Vielzahl von Streifen (22) umfasst, die sich axial entlang einer Oberfläche der Haut erstrecken, wobei die erste Haut einstückig aus einem ersten Fasermaterial ausgebildet ist, das aus ersten Fasern gebildet ist, wobei die Streifen aus einem zweiten Fasermaterial ausgebildet sind, das aus zweiten Fasern gebildet ist, und wobei sich mindestens einige der zweiten Fasern axial entlang des Rotorkörpers erstrecken.

13. Rotorkörper (3) nach Anspruch 12, wobei der Rotorkörper eine zweite, einstückig ausgebildete Haut (32) umfasst, die aus einem dritten Fasermaterial ausgebildet ist, das aus dritten Fasern gebildet ist, wobei zumindest einige der dritten Fasern zwischen 45 und 90 Grad zur Rohrachse (18) und vorzugsweise zwischen 50 und 80 Grad zur Rohrachse ausgerichtet sind, wobei die erste und die zweite Haut zusammen das Rotorrohr (2) bilden, und wobei ferner vorzugsweise die dritten Fasern in einer oder mehreren Außenschichten aus dritten Fasern bei nahezu 90 Grad zur Rohrachse, optional zwischen 88 Grad und 90 Grad zur Rohrachse ausgerichtet sind.

14. Rotorkörper (3) nach irgendeinem der Ansprüche 12 bis 13, der unter Verwendung eines Verfahrens nach irgendeinem der Ansprüche 1 bis 11 gebildet wurde.

15. Schiff, umfassend ein Rotorsegel (4), das an einem Abschnitt des Schiffes angebracht ist, wobei das Rotorsegel einen Rotorkörper (3) nach irgendeinem der Ansprüche 12 bis 13 umfasst.

## Revendications

1. Procédé de fabrication d'un corps de rotor (3) formant une partie d'une voile rotor (4), le procédé étant **caractérisé en ce qu'**il comprend les étapes de :
enroulement de premières fibres autour d'un mandrin (16) pour former une première peau (12) tubulaire formant un tube de rotor (2) ayant un axe de tube (18) ;
formation d'une pluralité de bandes (22) à partir des deuxièmes fibres ;
fixation des bandes à une surface de la première peau de sorte qu'au moins certaines des deuxièmes fibres s'étendent axialement le long du corps de rotor.

2. Procédé selon la revendication 1, dans lequel l'étape d'enroulement de premières fibres comprend l'étape d'enroulement des premières fibres de sorte qu'elles soient orientées de 45 à 90 degrés, et de préférence de 50 à 80 degrés par rapport à l'axe de tube (18).

3. Procédé selon la revendication 1 ou 2, comprenant l'étape supplémentaire d'imprégnation des premières fibres avec de la résine (20) avant l'enroulement des fibres autour du mandrin (16).

4. Procédé selon l'une quelconque des revendications précédentes, dans lequel l'étape d'enroulement de premières fibres comprend l'étape d'enroulement d'un matériau formé à partir des premières fibres autour du mandrin (16).

5. Procédé selon l'une quelconque des revendications précédentes, dans lequel les bandes sont formées au moyen d'un processus d'extrusion par étirage.

6. Procédé selon l'une quelconque des revendications précédentes, dans lequel l'étape de fixation des bandes (22) comprend l'étape de fixation des bandes sur une surface externe de la première peau (12), et de préférence dans lequel l'étape de fixation des bandes (22) comprend l'étape de pression des bandes sur les premières fibres avant le durcissement de la résine (20) entre les premières fibres.

7. Procédé selon l'une quelconque des revendications précédentes, comprenant l'étape supplémentaire de formation d'une seconde peau (32) par enroulement de troisièmes fibres autour des bandes (22), dans lequel les première (12) et seconde peaux forment ensemble le tube de rotor (2), et de préférence dans lequel l'étape d'enroulement de troisièmes fibres comprend l'enroulement d'au moins certaines des troisièmes fibres de sorte qu'elles soient orientées de 45 à 90 degrés par rapport à l'axe de tube (18), et optionnellement de 50 à 80 degrés par rapport à l'axe de tube, et/ou l'enroulement d'une ou de plusieurs couches externes de troisièmes fibres de sorte que les troisièmes fibres soient orientées à près de 90 degrés par rapport à l'axe de tube (18), et de préférence de 88 degrés à 90 degrés par rapport à l'axe de tube.

8. Procédé selon l'une quelconque des revendications 1 à 5, dans lequel l'étape de fixation des bandes (22) comprend l'étape de fixation des bandes à une surface interne de la première peau (12).

9. Procédé selon l'une quelconque des revendications précédentes, comprenant l'étape de formation d'une pluralité de tubes de rotor (2) et de jonction de tubes de rotor adjacents ensemble pour former le corps de rotor (3).

10. Procédé selon la revendication 9 en fonction de la revendication 8, comprenant l'étape de formation des bandes (22) de sorte qu'elles couvrent des jonctions entre des tubes de rotor (2) adjacents.

11. Procédé selon la revendication 8 ou une quelconque revendication dépendant de celle-ci, comprenant l'étape supplémentaire de variation axiale du nombre de bandes (22) fixées à la surface interne de la première peau (12).

12. Corps de rotor (3) formant une partie d'une voile rotor (4) et comprenant ;
une première peau (12) tubulaire formant un tube de rotor (2) et ayant un axe de tube (18) ; le corps de rotor (3) étant **caractérisé en ce qu'**il comprend
une pluralité de bandes (22) s'étendant axialement le long d'une surface de la peau, dans lequel la première peau est formée d'un seul tenant à partir d'un premier matériau fibreux formé à partir de premières fibres, les bandes sont formées à partir d'un deuxième matériau fibreux formé à partir de deuxièmes fibres, et au moins certaines desdites deuxièmes fibres s'étendent axialement le long du corps de rotor.

13. Corps de rotor (3) selon la revendication 12, dans lequel le corps de rotor comprend une seconde peau (32) formée d'un seul tenant formée à partir d'un troisième matériau fibreux formé à partir de troisièmes fibres, au moins certaines desdites troisièmes fibres étant orientées de 45 à 90 degrés par rapport à l'axe de tube (18), et de préférence de 50 à 80 degrés par rapport à l'axe de tube, dans lequel les première et seconde peaux forment ensemble le tube de rotor (2), et de préférence encore dans lequel des troisièmes fibres dans une ou plusieurs couches externes de troisièmes fibres sont orientées à près de 90 degrés par rapport à l'axe de tube, optionnellement de 88 degrés à 90 degrés par rapport à l'axe de tube.

14. Corps de rotor (3) selon l'une quelconque des revendications 12 à 13, formé au moyen d'un procédé selon l'une quelconque des revendications 1 à 11.

15. Navire comprenant une voile rotor (4) fixée à une partie du navire, ladite voile rotor comprenant un corps de rotor (3) selon l'une quelconque des revendications 12 à 13.
